# FASCICULE DE BREVET EUROPEEN

(11) **EP 0 995 485 B1**
(45) Date de publication et mention de la délivrance du brevet: **11.06.2003**
(21) Numéro de dépôt: 99402459.4
(22) Date de dépôt: 07.10.1999
(51) Int. Cl.: B01F 3/04, C02F 3/12

(54) **Dispositif d'agitation d'un liquide dans un réacteur et d'injection d'un gaz dans ce liquide**
Vorrichtung zum Rühren einer Flüssigkeit in einem Reaktor und zum Einspritzen eines Gases in diese Flüssigkeit
Apparatus for stirring a liquid in a reactor and for injecting a gas in this liquid

(30) Priorité: 09.10.1998 FR 9812696
(43) Date de publication de la demande: 26.04.2000
(73) Titulaire: L'air Liquide, S.A. à Directoire et Conseil de Surveillance pour l'Etude et l'Exploitation des Procédés Georges Claude, 75321 Paris Cedex 07 (FR); Robin Industries S.A., 77210 Samoreau (FR)
(72) Inventeur: Bouquet, Florent, 77870 Vulaines sur Seine (FR); Ferrand, Frédérique, 78000 Versailles (FR); Gouhinec, Florence, 78000 Versailles (FR)
(74) Mandataire: Vesin, Jacques

(56) Documents cités:
- EP-A- 0 446 192
- EP-A- 0 583 509
- EP-A- 0 593 074
- NL-A- 7 304 539

## Description

La présente invention a pour objet un dispositif d'agitation d'un liquide dans un réacteur et d'injection d'un gaz dans ce liquide, comprenant un dispositif d'entraînement disposé au-dessus du réacteur, pourvu d'un arbre de sortie vertical équipé à son extrémité d'au moins un mobile à flux axial immergé dans le liquide.

Le gaz injecté dans le liquide peut être soit un gaz oxygéné avec une proportion d'oxygène variant de 20 à 100%, soit du gaz carbonique, soit un gaz ozoné, soit un biogaz... Le liquide dans lequel doit être injecté le gaz est disposé dans des réacteurs utilisés notamment pour les traitements biologiques des effluents industriels et dont la hauteur varie généralement de 2 à 10 mètres de profondeur.

Dans ce qui suit le terme « réacteur » signifie « bassin » naturel (lagune, étang, lac...) ainsi que « réservoir» à parois plus ou moins proches et à ciel ouvert ou fermé.
Les réacteurs dans lesquels ces systèmes permettent d'injecter des gaz contiennent généralement des boues activées. Ces réacteurs peuvent donc être soit des bassins naturels, soit des réacteurs à ciel ouvert et à parois proches, soit des réacteurs fermés, sous pression ou non.

Dans le domaine du traitement biologique des eaux, on connaît différents types de systèmes en fonction de l'injection du gaz soit en surface, soit au fond du bassin. Par exemple il existe des turbines de surface, des brosses permettant de transférer de l'air dans le liquide en créant une agitation. De tels dispositifs ne sont utilisables que pour de faibles hauteurs d'eau et ont des capacités d'oxygénation limitées.

Ainsi le brevet EP-0 583 509 de PRAXAIR Technology, Inc décrit un système caractérisé principalement par une hélice située dans un arbre creux et entraînant, lors de sa rotation et par effet de Vortex à partir de la surface du liquide, du gaz et du liquide se trouvant sous un couvercle immergé. Le mélange gaz-liquide ainsi formé est propulsé vers le bas. Les bulles de gaz ne s'étant pas dissoutes remontent dans un rayon d'action correspondant globalement à celui du couvercle où elles sont récupérées pour être à nouveau réinjectées. L'apport de gaz d'appoint et la purge, ainsi que le niveau optimal du liquide dans le couvercle, sont régulés par la pression régnant sous le couvercle.

Bien que les rendements de transfert annoncés soient très bons, les limites de ce système sont principalement :
- la zone d'action limitée à un rayon proche de celui du couvercle et à une profondeur d'eau relativement faible,
- l'enrichissement de la phase gazeuse en CO2, N2 et autres gaz issus de l'activité biologique, dans le cas des applications en boues activées, et la nécessité de réaliser des purges provoquant des pertes d'O2,
- la complexité de la régulation de pression sous le couvercle,
- utilisation d'un gaz à pression élevée : nécessité d'utiliser un surpresseur à la suite d'un VSA ou MPSA. (unité de production sur site par adsorption sous pression ou avec régénération sous vide).

On connaît également des systèmes « de fond », poreux, avec injection de gaz et des moyens d'agitation. Ces systèmes ont une capacité d'oxygénation fixe et limitée, et ont tendance à s'encrasser. Il existe enfin d'autres dispositifs « de fond » comprenant des jets ou le dispositif connu sous la marque « Ventoxal » avec injection de gaz (air enrichi en oxygène, ou oxygène pur). Le système « Ventoxal » développé par la déposante est composé d'une pompe, d'un système d'injection type Venturi, d'un répartiteur de flux et d'un couple éjecteur-tuyère, pour lequel la pression d'injection de gaz dépend de la hauteur d'eau et reste principalement supérieure à 1,5 bars absolus. L'agitation obtenue est satisfaisante dans le fond du bassin mais peut s'avérer moyenne dans le reste du volume.

L'invention a pour but de proposer un dispositif d'agitation d'un liquide et d'injection d'un gaz dans ce liquide, du type mentionné ci-dessus, permettant de transférer efficacement un gaz dans un liquide et d'assurer une agitation permettant la mise et le maintien en suspension de particules.

Conformément à l'invention, l'arbre de sortie du dispositif d'entraînement porte également une turbine auto-aspirante immergée dans le liquide et pouvant être entraînée par l'arbre de sortie, et ce dernier est enveloppé coaxialement par un cylindre lié à son extrémité supérieure au dispositif d'entraînement et dont l'extrémité inférieure débouche dans la turbine ; dans l'extrémité supérieure du cylindre est percée une ouverture d'injection d'un gaz dans un intervalle annulaire délimité par l'arbre et le cylindre.

L'arbre de sortie du dispositif d'entraînement entraîne la turbine et l'hélice à la même vitesse.

La rotation de la turbine provoque l'aspiration du gaz au travers du cylindre creux enveloppant l'arbre de sortie du dispositif d'entraînement. Cette turbine propulse radialement la dispersion gaz-liquide.

Le dispositif comporte des moyens pour diriger vers l'hélice la dispersion gaz-liquide expulsée radialement par la turbine.

Suivant un mode de réalisation de l'invention, lesdits moyens comprennent un caisson annulaire formant déflecteur, enveloppant la turbine et profilé afin de diriger vers l'hélice le flux issu radialement de la turbine, et un ensemble de plaques sensiblement verticales formant contre-pales, disposées radialement et fixées au déflecteur.

De façon avantageuse, lesdits moyens peuvent comprendre un mobile d'agitation additionnel et de préférence entraîné en rotation par l'arbre de sortie, ou tout autre moyen, de préférence à vitesse de rotation identique à celle de l'arbre.

Le déflecteur qui enveloppe la turbine rabat la dispersion gaz-liquide vers l'hélice qui propulse des bulles de gaz vers le fond, et crée un débit de pompage liquide permettant l'agitation du bassin. Les contre-pales permettent de diriger les différents flux liquides et gazeux afin de maximiser les performances en terme de transfert et d'agitation.

L'invention sera maintenant décrite en référence au dessin annexé qui en illustre une forme de réalisation à titre d'exemple non limitatif.

La figure 1 est une vue en coupe axiale verticale d'une forme de réalisation du dispositif d'agitation de liquide et d'injection de gaz dans ce liquide conforme à l'invention.

La figure 2 est une vue en élévation du dispositif de la figure 1 montrant notamment le déflecteur contenant la turbine, ainsi qu'en trait mixte, une variante de réalisation.

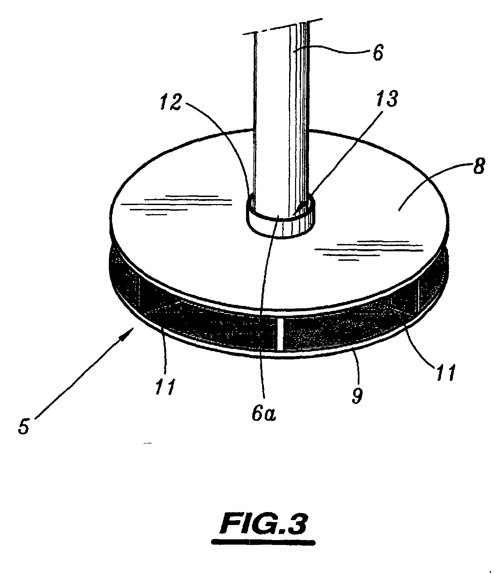

La figure 3 est une vue en perspective représentant la turbine autoaspirante disposée dans le déflecteur du dispositif des figures 1 et 2.

Le dispositif représenté sur les dessins est destiné à permettre l'agitation d'un liquide L dans un réacteur ainsi que l'injection d'un gaz dans ce liquide, ce gaz étant de préférence, mais non exclusivement, oxygéné.

Le dispositif comprend un dispositif d'entraînement 1, par exemple un moteur, disposé au dessus de la surface du liquide L, pourvu d'un arbre rotatif de sortie 2 s'étendant verticalement et partiellement immergé dans le liquide L. L'arbre de sortie 2 est équipé à son extrémité inférieure 3 d'une hélice 4 immergée dans le liquide L. L'arbre 2 porte également, disposée entre l'hélice 4 et la surface du liquide L, une turbine autoaspirante 5 qui est par conséquent immergée dans le réacteur et peut être entraînée par l'arbre de sortie 2 à la même vitesse que l'hélice 4. L'arbre de sortie 2 est enveloppé coaxialement par un cylindre 6 lié à son extrémité supérieure au dispositif d'entraînement 1, avec interposition d'un dispositif d'étanchéité 7 connu en soi, et dont l'extrémité inférieure 6a débouche dans la turbine 5 coaxialement à l'arbre 2.

La turbine autoaspirante 5 est constituée de deux disques superposés 8, 9, placés horizontalement, et d'un ensemble d'aubes radiales 11 placées entre les disques 8, 9 et fixées à ceux-ci. Dans le disque supérieur 8, est agencé un trou central 12 délimité par une collerette saillante, dans lequel pénètre l'extrémité inférieure 6a du cylindre 6, lequel délimite ainsi avec le bord dudit trou 12 un espace annulaire 13.

Dans l'extrémité supérieure du cylindre 6 est percée une ouverture 14 d'injection d'un gaz dans l'intervalle annulaire 15 délimité par l'arbre 2 et par le cylindre 6. Le système d'injection de gaz dans l'orifice 14 est connu en soi et non représenté.

L'arbre de sortie 2 traverse axialement les disques 8 et 9 en étant fixé au disque inférieur 9, de sorte que lorsque le dispositif d'entraînement 1 est actionné, l'arbre 2 entraîne la turbine 5 et l'hélice 4 en rotation à la même vitesse. La rotation de la turbine 5 crée l'aspiration du gaz arrivant par l'orifice 14, par l'intermédiaire du cylindre 6, ainsi que l'aspiration d'une partie du liquide qui s'introduit par l'intervalle annulaire 13 laissé libre entre la turbine 5 et le cylindre 6. Cette dispersion gaz-liquide se traduit par une population de bulles dont la taille est majoritairement comprise entre 100µm et 2mm.

Le dispositif comprend également des moyens pour diriger vers l'hélice 4 la dispersion gaz-liquide expulsée radialement par la turbine 5 entre ses aubes 11. Dans le mode de réalisation décrit, ces moyens comprennent un caisson annulaire 16 formant déflecteur, percé de deux ouvertures centrales superposées 17, 18 coaxiales à l'arbre 2, le diamètre de l'ouverture inférieure 18 étant sensiblement supérieur à celui de l'ouverture supérieure 17 et sensiblement égal à celui (d) de la turbine 5.

Les moyens pour diriger vers l'hélice 4 la dispersion de gaz-liquide comprennent également un ensemble de plaques 19 sensiblement verticales, formant des contre-pales, disposées radialement autour du caisson déflecteur 16 et fixées à celui-ci. A cet effet, chaque contre-pale 19 pénètre radialement sur une certaine distance à l'intérieur du caisson déflecteur 16, auquel elle est fixée par des moyens appropriés connus en soi, par exemple soudure ou rivetage. Les contre-pales 19 peuvent être disposées autour de la turbine 5 et de l'hélice 4 en nombre approprié à des intervalles angulaires déterminés. Dans le bord intérieur de chaque contre-pale 19 est ménagée, au niveau de l'hélice 4, une entaille 21 dans laquelle peuvent pénétrer des extrémités des pales de l'hélice 4.

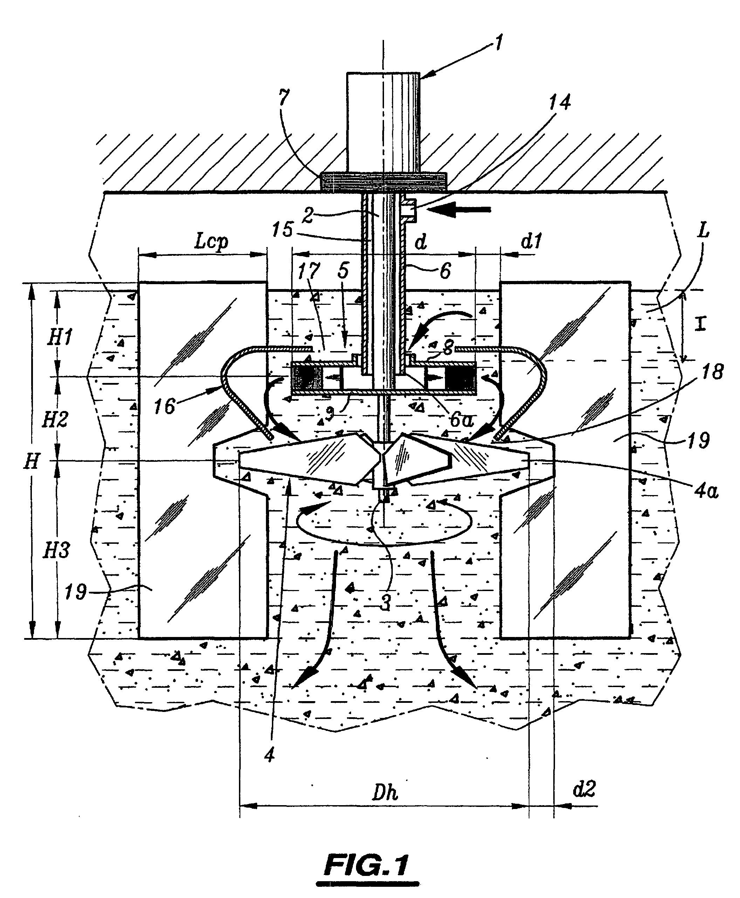

Les contre-pales 19 s'étendent verticalement à partir d'un niveau correspondant sensiblement à celui du liquide L, sur une hauteur totale H comprise entre 0,7 fois et 12 fois le diamètre d de la turbine 5 (Figure 1).

Le dispositif d'agitation de liquide et d'injection de gaz dans ce liquide, qui vient d'être décrit fonctionne de la manière suivante.

Une fois le dispositif d'entraînement 1 mis en marche, l'arbre de sortie 2 entraîne en rotation à la même vitesse la turbine autoaspirante 5 et l'hélice terminale 4. Le gaz est injecté ou aspiré par l'ouverture 14 dans l'intervalle annulaire 15 d'où il est aspiré vers la turbine 5, de même qu'une partie du liquide L dans l'intervalle annulaire 13 entre la plaque supérieure 8 et le cylindre 6 (comme indiqué par la flèche sur la figure 1). Au moins 90% de la dispersion de bulles est reprise grâce à la présence des contre-pales 19 et du déflecteur 16 qui dirige le flux vers l'hélice 4, comme indiqué par les deux flèches latérales sur la figure 1.L'hélice 4, constitué d'au moins deux pales 4a, propulse la dispersion des bulles à une vitesse comprise entre par exemple 1 et 5m/seconde vers le fond du bassin. Le dimensionnement et les conditions opératoires appliquées peuvent permettre de propulser les bulles jusqu'à 10 mètres de profondeur tout en conservant une vitesse horizontale au radier suffisante (c'est-à-dire supérieure à 0,1 m/s) pour empêcher ou prévenir la formation de zones de dépôts ou de particules solides en fond de bassin.

Les bulles projetées en fond de bassin remontent ensuite en périphérie du mobile (4, 5) d'agitation autour de l'axe central 2. Le temps de parcours des bulles de gaz dans le liquide est suffisant pour assurer le transfert de l'oxygène de la phase gaz (si le gaz injecté est oxygéné) vers la phase liquide. L'oxygène peut ainsi être utilisé pour des besoins de respiration de la biomasse ou d'oxydation de certains composés.

Le débit de pompage induit par la présence de l'hélice de reprise 4 et des contre-pales 19 permet d'assurer le brassage du volume liquide autour du mobile 4 d'agitation dans un rayon qui dépend de la puissance dissipée par l'hélice 4 (puissance comprise entre 40 et 90% de la puissance appliquée à l'arbre-moteur 2). Ce brassage permet la mise en suspension des boues et/ou des particules solides afin d'assurer l'homogénéisation de la concentration en boues et/ou en particules dans l'ensemble des volumes brassés par l'hélice 4.

Lorsque le gaz injecté par l'orifice 14 est oxygéné, le dispositif décrit ci-dessus permet de réaliser des traitements biologiques des effluents industriels ou urbains, en transférant l'oxygène dans la boue activée et en agitant la biomasse afin d'homogénéiser la concentration en boues. Le déflecteur 16 qui enveloppe la turbine 5 rabat la dispersion gaz-liquide vers l'hélice 4 qui propulse les bulles de gaz vers le fond du réacteur, et crée un débit de pompage liquide permettant l'agitation du réacteur. Les contre-pales 19 permettent de diriger les différents flux liquides et gazeux afin de maximiser les performances en terme de transfert et d'agitation.

### Exemple de mise en oeuvre du dispositif

### Dimensionnement de la turbine 5

Les critères d'extrapolation et de dimensionnement de la turbine 5, après essais d'optimisation, sont les suivants (Fig. 1):
H1 = 0,1 à 5d (d étant le diamètre de la turbine 5)
H2 = 0,5 à 2d
H3 = 0,1 à 5d

d1 = 0,01 à 0,1 *d (d1 est la distance radiale entre la turbine 5 et chaque contre-pale 19)
d2 = 0,01 à 0,1 *d (d2 est la distance radiale entre le fond d'une entaille 21 et les extrémités des pales 4a)
Lcp = 0,5 à 2 * d (Lcp est la largeur de chaque contre-pale)
Dh = 1 à 2 *d (Dh = diamètre de l'hélice 4)

Les contre-pales 19, au nombre de 4 dans l'exemple illustré aux dessins, sont orientées radialement par rapport à l'axe de la turbine. Elles sont au moins deux, dont le contour épouse la forme géométrique du rotor (hélice).

Les contre-pales ont été ajoutées pour transformer le flux tangentiel en un flux axial orienté vers le fond de la cuve. Leur nombre a été défini expérimentalement, dans le but de répartir sur toute la circonférence les zones de dispersion Gaz / Liquide remontant vers la surface.

Ces contre-pales partent de la surface du liquide, et peuvent descendre avantageusement jusqu'à une profondeur égale au plus à 12 fois le diamètre de la turbine. Leur positionnement par rapport à la surface est nécessaire pour éviter la formation d'un Vortex qui conduirait au désamorçage de la turbine.

Pour l'hélice de reprise de la dispersion Gaz / Liquide, le nombre de pales 4a varie de 2 à 12. Il est défini de façon à limiter les risques d'engorgement par rapport à la plage de fonctionnement de la turbine en ratio Gaz Liquide.

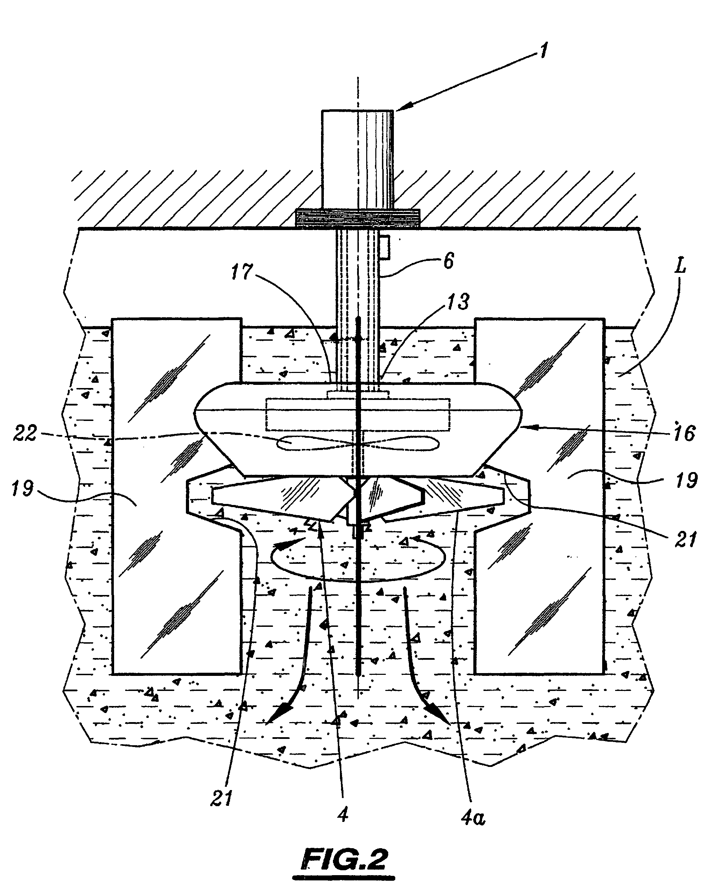

Le taux de reprise de la dispersion gaz-liquide peut avantageusement être augmenté par l'ajout d'un mobile additionnel 22 (figure 2), par exemple une hélice à deux ou plusieurs pales. Ce mobile 22 peut être fixé à l'arbre de sortie 2 comme représenté, et permet d'augmenter la vitesse périphérique du liquide dans le caisson annulaire.

Les paramètres opératoires de la turbine sont :
- L'immersion I qui est la distance entre le niveau du liquide et le disque supérieur de la turbine.
- La vitesse de rotation N
- Le débit gazeux Qg
- la pression d'injection du gaz Pg

Les critères d'extrapolation de ces paramètres opératoires sont les suivants :
- I/d de 0,01 à 5 : valeur nominale = 0,4
- Froude modifié = Fr* = N² * d² / g * I = forces d'inertie / forces de gravité
   Fr * = de 0,1 à 25 ; valeur nominale = 1.1 à 2.5
   Fr* < 0,1 => aspiration de gaz très faible
   Fr* > 25 => risque d'engorgement
- Puissance consommée = N³ * d⁵ * Np avec Np nombre de puissance= f(Fr*)

Les modes de conduite du dispositif visés par l'invention peuvent être les suivants :
- Fonctionnement continu :
   - Fonctionnement à vitesse de rotation fixe, la régulation du débit gazeux se faisant par un organe de contrôle du débit placé sur la ligne fluide,
   - Fonctionnement à vitesse variable et débit gazeux variable afin de se placer en permanence dans les conditions optimales de fonctionnement de la turbine.
- Fonctionnement alterné/séquencé :
   Fonctionnement par cycles en alternant des phases d'agitation avec injection de gaz et des phases d'agitation sans injection de gaz, et/ou alternant des phases d'agitation avec des vitesses variables. Ce fonctionnement trouve notamment toute sa justification et son intérêt pour la nitrification/dénitrification en mono-bassin.

Les plages de conditions opératoires sont les suivantes :
- Les apports spécifiques nets (ASN) mesurés en KgO2/kWh absorbés peuvent varier de 0,5 à 8.
- La capacité d'aspiration de la turbine 5 peut atteindre 50 Nm3/h de gaz par kWh consommé par cette turbine.

Les vitesses d'agitation se situent environ de 50 à 1000 tr/min.

Le ratio immersion/diamètre de la turbine 5 varie de 0,01 à 5.

Le Froude modifié se situe entre sensiblement 0,1 et 25

La hauteur d'eau dans le bassin peut se situer classiquement entre environ 2 et 10m.
- Le rapport de puissance dissipé entre l'hélice 4 et la turbine 5 peut varier de 40/60 à 90/10.

Le liquide peut être l'un des suivants : boues activées, effluents de rejets industriels ou urbains, eau de « process », eau de mer, boues concentrées.

Le système décrit ci-dessus peut être inclus
- soit dans un réacteur biologique oulet chimique fermé ou ouvert, fonctionnant sous pression ou non, couplé à des procédés de séparation physico-chimique (décanteur, flottateur, membranes, filtres...)
- soit dans un réacteur biologique et/ou chimique fermé fonctionnant sous pression avec contrôle de la teneur en gaz dans le ciel gazeux par l'intermédiaire d'une purge.

Dans le cas de bassins profonds (avec une hauteur d'eau supérieure à 7 mètres environ) ou de stations déjà équipées, le système peut fonctionner avec des systèmes de transfert de fond de bassins à l'air ou à l'oxygène tel que des « Ventoxal ».

Le dispositif conforme à l'invention présente les avantages suivants :
- aspiration du gaz à pression faible (à partir de 0,7 bars absolus) permettant une aspiration de l'air atmosphérique ou l'utilisation de l'oxygène produit sur site sans étape de recompression ou provenant d'autres étapes ou procédés du site utilisant des gaz,
- limitation des problèmes de baisse de pH imputable à la réinjection du CO2 produit par les bactéries,
- le mobile de reprise (4) dont la puissance est ajustée suivant les besoins, possède un large rayon d'action et permet de propulser le mélange gaz-liquide en fond de bassin tout en atteignant des niveaux d'agitation satisfaisants, même pour des profondeurs d'eau importantes (7 à 10 mètres environ) .
- possibilité de découpler l'agitation et l'injection de gaz, permettant ainsi les différents modes de conduite exposés précédemment (fonctionnement continu et alterné/séquencé).

Par rapport au système Ventoxal, le système selon l'invention présente les avantages de permettre d'injecter du gaz à pression atmosphérique ou légèrement inférieure à celle-ci, et d'augmenter les rendements de transfert d'au moins 10% à 50% suivant la hauteur d'eau et le débit de gaz.

Le système peut être équipé d'un ou plusieurs mobiles à flux axial tels que des hélices montées coaxialement sur l'arbre 2.

## Revendications

1. Dispositif d'agitation d'un liquide (L) dans un réacteur et d'injection d'un gaz dans ce liquide, comprenant un dispositif d'entraînement (1) disposé au-dessus du récipient, pourvu d'un arbre de sortie (2) vertical équipé à son extrémité d'au moins un mobile à flux axial (4) immergé dans le liquide, **caractérisé en ce que** l'arbre de sortie du dispositif d'entraînement porte également une turbine auto-aspirante (5) immergée dans le réacteur et pouvant être entraînée par l'arbre de sortie (2), **en ce que** ce dernier est enveloppé coaxialement par un cylindre (6) lié à son extrémité supérieure de manière étanche au dispositif d'entraînement et dont l'extrémité inférieure (6a) débouche dans la turbine, et **en ce que** dans l'extrémité supérieure du cylindre est percée une ouverture (14) d'injection d'un gaz dans un intervalle annulaire (15) délimité par l'arbre et le cylindre.

2. Dispositif selon la revendication 1, **caractérisé en ce que** la turbine (5) est constituée de deux disques superposés (8, 9) et d'un ensemble d'aubes radiales (11) disposées entre les disques et fixées à ceux-ci, et dans le disque supérieur (8) est agencé un trou central (12) dans lequel pénètre l'extrémité inférieure (6a) du cylindre (6) qui délimite avec le bord dudit trou un espace au moins partiellement annulaire (13) par lequel du liquide peut être aspiré dans la turbine.

3. Dispositif selon l'une des revendications 1 et 2, **caractérisé en ce qu'**il comporte des moyens pour diriger vers le mobile à flux axial (4) la dispersion gaz-liquide expulsée radialement par la turbine (5).

4. Dispositif selon la revendication 3, **caractérisé en ce que** lesdits moyens comprennent un caisson annulaire (16) formant déflecteur, enveloppant la turbine (5) et profilé afin de diriger vers le mobile à flux axial (4) un flux issu radialement de la turbine, une ouverture centrale (18) étant agencée dans la face inférieure de ce caisson, et des plaques (19) sensiblement verticales formant des contre-pales, disposées radialement et fixées au déflecteur (16).

5. Dispositif selon la revendication 4, **caractérisé en ce que** lesdits moyens comprennent en outre un mobile (22) d'agitation additionnel.

6. Dispositif selon l'une des revendications 4 ou 5, **caractérisé en ce que** les contre-pales (19) sont au nombre d'au moins deux et s'étendent verticalement à partir d'un niveau correspondant sensiblement à celui (L) de la surface du liquide sur une hauteur totale (H) comprise entre environ 0,7 fois et 12 fois le diamètre (d) de la turbine (5).

7. Dispositif selon l'une des revendications 1 à 6, **caractérisé en ce que** le mobile à flux axial est une hélice (4).

8. Dispositif selon la revendication 7, **caractérisé en ce que** des entailles radiales (21) sont ménagées dans les contre-pales (19) afin de permettre aux pales (4a) de l'hélice (4) d'y pénétrer.

## Claims

1. Device for agitating a liquid (L) in a reactor and for injecting a gas into this liquid, comprising a drive device (1) arranged above the container, provided with a vertical output shaft (2) equipped at its end with at least one axial-flow mobile assembly (4) immersed in the liquid, **characterized in that** the output shaft of the drive device also carries an auto-suction turbine (5) immersed in the reactor and drivable by the output shaft (2), **in that** the latter is enveloped coaxially by a cylinder (6) linked at its upper end in a leakproof manner to the drive device and whose lower end (6a) opens out into the turbine, and **in that** in the upper end of the cylinder is drilled an aperture (14) for injecting a gas into an annular gap (15) delimited by the shaft and the cylinder.

2. Device according to Claim 1, **characterized in that** the turbine (5) consists of two superposed discs (8, 9) and of a set of radial vanes (11) arranged between the discs and fixed to them, and in the upper disc (8) is made a central hole (12) into which penetrates the lower end (6a) of the cylinder (6) which together with the edge of the said hole delimits an at least partially annular space (13) through which liquid can be sucked into the turbine.

3. Device according to one of Claims 1 and 2, **characterized in that** it comprises means for directing towards the axial-flow mobile assembly (4) the gas/liquid dispersion expelled radially by the turbine (5).

4. Device according to Claim 3, **characterized in that** the said means comprise an annular box (16) forming a deflector, enveloping the turbine (5) and profiled so as to direct towards the axial-flow mobile assembly (4) a stream issuing radially from the turbine, a central aperture (18) being made in the lower face of this box, and substantially vertical plates (19) forming counter-blades, arranged radially and fixed to the deflector (16).

5. Device according to Claim 4, **characterized in that** the said means furthermore comprise an additional agitation mobile assembly (22).

6. Device according to one of Claims 4 or 5, **characterized in that** the counter-blades (19) are at least two in number and extend vertically from a level corresponding substantially to that (L) of the surface of the liquid over a total height (H) of between around 0.7 times and 12 times the diameter (d) of the turbine (5).

7. Device according to one of Claims 1 to 6, **characterized in that** the axial-flow mobile assembly is a propeller (4).

8. Device according to Claim 7, **characterized in that** radial notches (21) are cut into the counter-blades (19) so as to allow the blades (4a) of the propeller (4) to penetrate therein.

## Patentansprüche

1. Vorrichtung zum Rühren einer Flüssigkeit (L) in einem Reaktor und zum Einspritzen eines Gases in diese Flüssigkeit mit einer über dem Behälter angeordneten Antriebsvorrichtung (1), die mit einer vertikalen Abtriebswelle (2) versehen ist, die an ihrem Ende mit zumindest einem beweglichen Axialströmungselement (4) versehen ist, das in die Flüssigkeit eintaucht, **dadurch gekennzeichnet, dass** die Abtriebswelle der Antriebsvorrichtung ebenso eine selbstansaugende Turbine (5) trägt, die in den Reaktor eintaucht und durch die Abtriebswelle (2) angetrieben werden kann, dass diese letztere koaxial von einem Zylinder (6) eingehüllt ist, der an seinem oberen Ende dicht mit der Antriebsvorrichtung verbunden ist und dessen unteres Ende (6a) in die Turbine mündet, und dass in dem oberen Ende des Zylinders eine Öffnung (14) zum Einspritzen eines Gases in einen ringförmigen Zwischenraum (15), der von der Welle und dem Zylinder begrenzt wird, eingebracht ist.

2. Vorrichtung nach Anspruch 1, **dadurch gekennzeichnet, dass** die Turbine (5) aus zwei übereinander liegenden Scheiben (8, 9) und einer Anordnung radialer Schaufeln (11) besteht, die zwischen den Scheiben angeordnet und an diesen befestigt sind, und dass in der oberen Scheibe (8) ein mittiges Loch (12) ausgebildet ist, in das das untere Ende (6a) des Zylinders (6) eindringt, der mit dem Rand des Lochs einen zumindest teilweise ringförmigen Raum (13) begrenzt, durch den Flüssigkeit in die Turbine gesaugt werden kann.

3. Vorrichtung nach einem der Ansprüche 1 und 2, **dadurch gekennzeichnet, dass** sie Mittel umfasst, um die von der Turbine (5) radial ausgestoßene Gas-Flüssigkeits-Dispersion zu dem beweglichen Axialströmungselement (4) zu lenken.

4. Vorrichtung nach Anspruch 3, **dadurch gekennzeichnet, dass** die Mittel ein ringförmiges Gehäuse (16), das einen die Turbine (5) einhüllenden Deflektor bildet und dafür profiliert ist, einen radial von der Turbine abgegebenen Fluss zu dem beweglichen Axialströmungselement (4) zu lenken, wobei eine mittige Öffnung (18) auf der Unterseite dieses Gehäuses ausgebildet ist, und im Wesentlichen vertikale Platten (19) umfassen, die Gegenblätter bilden, die radial angeordnet und an dem Deflektor (16) befestigt sind.

5. Vorrichtung nach Anspruch 4, **dadurch gekennzeichnet, dass** die Mittel außerdem ein zusätzliches bewegliches Rührelement (22) umfassen.

6. Vorrichtung nach einem der Ansprüche 4 oder 5, **dadurch gekennzeichnet, dass** die Zahl der Gegenblätter (19) zumindest zwei ist und sie sich vertikal ab einem Niveau erstrecken, das im Wesentlichen demjenigen (L) der Oberfläche der Flüssigkeit auf einer Gesamthöhe (H) entspricht, die zwischen dem etwa 0,7-fachen und 12-fachen des Durchmessers (d) der Turbine (5) liegt.

7. Vorrichtung nach einem der Ansprüche 1 bis 6, **dadurch gekennzeichnet, dass** das bewegliche Axialströmungselement ein Propeller (4) ist.

8. Vorrichtung nach Anspruch 7, **dadurch gekennzeichnet, dass** radiale Einschnitte (21) in den Gegenblättern (19) ausgebildet sind, um es den Blättern (4a) des Propellers (4) zu gestatten, in diese einzudringen.
